# EUROPÄISCHE PATENTANMELDUNG

(11) **EP 2 000 933 A1**
(43) Veröffentlichungstag der Anmeldung: **10.12.2008**
(21) Anmeldenummer: 08008018.7
(22) Anmeldetag: 25.04.2008
(51) Int. Cl.: G06F 17/50, H02G 3/00, G06Q 10/00

(54) **Verfahren zur Verlegung von Kabeln in Industrieanlagen**

(30) Priorität: 06.06.2007 DE 102007026318
(71) Anmelder: SAG GmbH, 63225 Langen (DE)
(72) Erfinder:
(74) Vertreter: Rohmann, Michael

(57) **Zusammenfassung**

Verfahren zur Verlegung von Kabeln in Industrieanlagen, insbesondere in Kraftwerken, wobei in einer Vorbereitungsphase Verlegedaten für die Verlegung der Kabel in einen Rechner eingespeist werden. Anhand der Verlegedaten wird ein Verlegemodell bzw. ein Soll-Zustand für die Verlegung von Kabeln und Wegelementen in der Industrieanlage errechnet. In einer nachfolgenden Montagephase werden die Wegelemente und die Kabel bzw. die Kabel auf zugeordneten Wegelementen nach dem Verlegemodell in der Industrieanlage verlegt. Die den verlegten Wegelementen und Kabeln zugeordneten Ist-Daten werden in den Rechner eingespeist und dort als Ist-Zustand gespeichert und ggf. wird der Soll-Zustand durch den Ist-Zustand ersetzt.

## Beschreibung

Die Erfindung betrifft ein Verfahren zur Verlegung von Kabeln in Industrieanlagen, insbesondere in Kraftwerken. Die Kabel werden in der Regel auf Wegelementen, insbesondere auf Kabeltrassen verlegt. Eine Kabeltrasse nimmt dabei normalerweise eine Mehrzahl von Kabeln auf.

Aus der Praxis sind verschiedene Verfahren zur Verlegung von Kabeln in Kraftwerken bekannt. Bei diesen bekannten Maßnahmen werden in der Regel Pläne und CAD-Zeichnungen erstellt, mit deren Hilfe dann die Montage der Kabeltrassen und Kabel erfolgt. Die Erstellung dieser Unterlagen erfolgt teilweise manuell und/oder mit Hilfe von CAD-Computerprogrammen oder anderen Hilfs-Computerprogrammen. In größeren Kraftwerksanlagen und Industrieanlagen sind häufig mehrere tausend Kabel auf teilweise weitverzweigte Kabeltrassen geordnet zu verlegen. Die aus der Praxis bekannten Maßnahmen sind insbesondere im Hinblick darauf aufwendig bzw. zeitaufwendig. Aus diesem Grunde ist eine termingerechte Errichtung der Anlagen nicht immer möglich. Die bekannten Verfahren erlauben häufig auch keine zufriedenstellende Dokumentation über den Montagefortschritt und es fehlt eine befriedigende Schlussdokumentation der Kabelverlegung, die eine spätere einfache Wartung und Instandsetzung der Kabelanlage erlauben würde. Im Ergebnis sind die bekannten Maßnahmen verbesserungsbedürftig.

Der Erfindung liegt das technische Problem zugrunde ein Verfahren der eingangs genannten Art anzugeben mit dem die vorstehend erläuterten Nachteile vermieden werden können und mit dem insbesondere eine wenig aufwendige bzw. wenig zeitaufwendige und optimal dokumentierbare Kabelverlegung möglich ist.

Zur Lösung dieses technischen Problems lehrt die Erfindung ein Verfahren zur Verlegung von Kabeln in Industrieanlagen, insbesondere in Kraftwerken,
wobei in einer Vorbereitungsphase Verlegedaten für die Verlegung der Kabel in einen Rechner eingespeist werden und dort abgespeichert werden,
wobei anhand der Verlegedaten ein Verlegemodell bzw. ein Soll-Zustand für die Verlegung von Kabeln und Wegelementen in der Industrieanlage errechnet wird,
wobei in einer nachfolgenden Montagephase die Wegelemente und die Kabel bzw. die Kabel auf zugeordneten Wegelementen nach dem Verlegemodell in der Industrieanlage verlegt werden
und wobei die den bereits verlegten Wegelementen und Kabeln zugeordneten Ist-Daten in den Rechner eingespeist und dort als Ist-Zustand gespeichert werden und wobei ggf. der Soll-Zustand durch den Ist-Zustand ersetzt wird.

Wegelemente meint im Rahmen der Erfindung insbesondere Kabeltrassen für die zu verlegenden Kabel. Verlegte Wegelemente und verlegte Kabel meint hier und nachfolgend insbesondere Kabeltrassen und montierte Kabel. - Mit Verlegemodell ist im Rahmen der Erfindung ein Computermodell für das Verlegen der Wegelemente und Kabel gemeint, wobei dieses Computermodell vorzugsweise an einem Computerbildschirm visualisierbar ist.

Die Ist-Daten sind die Daten der bereits tatsächlich montierten Kabeltrassen und montierten Kabel. Es liegt im Rahmen der Erfindung, dass der Soll-Zustand mit dem Ist-Zustand verglichen wird und bei Unterschieden zwischen Soll-Zustand und Ist-Zustand erfolgt eine Anpassung des Verlegemodells bzw. des Soll-Zustandes im Computer an den Ist-Zustand. Auf diese Weise wird die tatsächliche Wegelement- und Kabelverlegung laufend aktuell dokumentiert. Im Zuge der Montage der Wegelemente und Kabel erfolgt also eine kontinuierliche Aktualisierung der Daten im Rechner. Insbesondere werden Soll-Daten (Soll-Zustand) durch Ist-Daten (Ist-Zustand) ersetzt.

Erfindungsgemäß werden in der Vorbereitungsphase Verlegedaten für die Verlegung der Kabel bzw. für die Verlegung der Wegelemente in den Rechner eingespeist. Es liegt im Rahmen der Erfindung, dass die Verlegedaten die mit Kabeln zu verbindenden Anfangs- und Endpunkte und/oder Daten der Wegelemente und/oder Kabeldaten betreffen. Die Daten bzw. Verlegedaten der mit Kabeln zu verbindenden Anfangs- und Endpunkte enthalten insbesondere die anlagenbezogenen Kennzeichnungen dieser Anfangs- und Endpunkte und/oder die Entfernung zwischen Anfangs- und Endpunkten und/oder eventuelle Hindernisse zwischen Anfangs- und Endpunkten. Es liegt im Rahmen der Erfindung, dass die Verlegedaten auch den Aufbau und die Aufteilung bzw. Raumaufteilung der Industrieanlage betreffen, so dass die zu verbindenden Anfangs- und Endpunkte unter Berücksichtigung von Hindernissen für die Kabelverlegung im Verlegemodell erfasst werden können. Es liegt weiterhin im Rahmen der Erfindung, dass die Verlegedaten die Art der zu verbindenden Anschluss- und Endpunkte umfassen, so dass im Rahmen des Verlegemodells im Rechner die Anzahl und/oder die Eigenschaften (Kapazität, Querschnitt, etc.) der benötigten Kabel ermittelt werden können.

Die Daten der Wegelemente (Kabeltrassen) betreffen zumindest die Länge und die Kabelaufnahmekapazität der zur Verfügung stehenden Wegelemente. Zweckmäßigerweise betreffen die Daten der Wegelemente auch die Anzahl der jeweils bezüglich Länge und Kabelaufnahmekapazität zur Verfügung stehenden Wegelemente (Kabeltrassen). Nach bevorzugter Ausführungsform der Erfindung werden mit Hilfe des Verlegemodells im Rechner die für bestimmte Kabelverlegungen noch zu beschaffenden bzw. noch anzufordernden Wegelemente ermittelt.

Es liegt weiterhin im Rahmen der Erfindung, dass die Kabeldaten zumindest die Kabellänge und/oder den Kabelquerschnitt und/oder die Kabelkapazität der zur Verfügung stehenden Kabel betreffen. Die Kabeldaten können fernerhin auch die Art der Kabelummantelung und/oder die Brandschutzeigenschaften der zur Verfügung stehenden Kabel betreffen. Vorzugsweise betreffen die Kabeldaten die Anzahl und Länge der jeweils zur Verfügung stehenden Kabel bzw. die Anzahl und Art der zur Verfügung stehenden den Kabeln zugeordneten Kabeltrommeln. Nach empfohlener Ausführungsform der Erfindung können dann mit Hilfe des Verlegemodells im Rechner die noch benötigten und somit noch zu beschaffenden Kabel bzw. Kabeltrommeln ermittelt werden.

Erfindungsgemäß werden in der Montagephase bzw. nach der Montagephase nach dem Verlegen von Wegelementen und/oder Kabeln die zugeordneten Ist-Daten in den Rechner eingespeist und dort als Ist-Zustand gespeichert. Die Ist-Daten betreffen die tatsächlichen Anschlusspunkte bzw. Anfangs- und Endpunkte von bereits montierten Wegelementen und/oder Kabeln sowie die Daten der Wegelemente und die Kabeldaten der bereits montierten Wegelemente und/oder Kabel. Vorzugsweise betreffen die Ist-Daten insbesondere auch die Restkapazität von bereits verlegten Wegelementen, d. h. die Kapazität zur möglichen Aufnahme weiterer Kabel.

Eine besonders bevorzugte Ausführungsform der Erfindung ist dadurch gekennzeichnet, dass in den Rechner als Verlegedaten die mit zumindest einem Kabel zu verbindenden Anfangs- und Endpunkte eingegeben werden und dass anschließend von dem Rechner überprüft wird, ob zwischen einem Anfangspunkt A und einem Endpunkt E bereits zumindest ein geeignetes Wegelement verlegt ist und dass bejahendenfalls das Verlegemodell die Verlegung eines Kabels von A nach E auf dem zumindest einen verlegten Wegelement umfasst/vorschlägt und/oder dass das Verlegemodell die Verlegung zumindest eines weiteren erforderlichen Wegelementes zwischen A und E umfasst/vorschlägt und dass das Kabel und/oder das zumindest eine weitere Wegelement in der anschließenden Montagephase entsprechend verlegt wird/werden. Zweckmäßigerweise wird von dem Rechner ermittelt, ob zwischen dem Anfangspunkt A und dem Endpunkt E bereits Wegelemente bzw. Kabeltrassen verlegt sind, über die das Kabel von A zu E verlegt werden kann. Die in Frage kommenden Wegelemente werden vom Verlegemodell angegeben und/oder es wird die Montage zumindest eines weiteren Wegelementes vorgeschlagen. Entsprechend dieser Angaben erfolgt dann in der Montagephase die Verlegung des Kabels von A nach E über die vorgeschlagenen bereits vorhandenen Wegelemente und ggf. die Montage zumindest eines weiteren erforderlichen Wegelementes.

Nach einer empfohlenen Ausführungsform der Erfindung wird mit dem Rechner bzw. im Rahmen des Verlegemodells das für die Kabelverlegung vorhandene Material mit dem für die Kabelverlegung gemäß Verlegemodell benötigten Material verglichen. Die in den Rechner eingegebenen Verlegedaten umfassen also das für die Kabelverlegung vorhandene Material. Material meint hier insbesondere Kabel bzw. Kabeltrommeln und Wegelemente (Kabeltrassen) sowie für die Verlegung der Kabel und Wegelemente erforderliche Montageelemente. Mit dem Rechner kann dann im Rahmen des Verlegemodells das für die Realisierung des Verlegemodells noch zu beschaffende bzw. noch anzufordernde Material ermittelt werden. In Abhängigkeit von dieser Ermittlung erfolgen dann zweckmäßigerweise entsprechende Bestellungen bezüglich des noch zu beschaffenden Materials.

Es liegt weiterhin im Rahmen der Erfindung, dass in dem Rechner im Rahmen des Verlegemodells ein Terminplan für die Montagephase und die damit verbundenen erforderlichen Maßnahmen erstellt wird. Der Terminplan gibt insbesondere die Reihenfolge der zu verlegenden Wegelemente und/oder Kabel vor.

Eine Ausführungsform der im Rahmen der Erfindung ganz besondere Bedeutung zukommt ist dadurch gekennzeichnet, dass die einem Kabel zugeordneten Montagedaten auf einer Kabelziehkarte dokumentiert werden, welche Kabelziehkarte von dem Rechner erstellt wird und dass das Kabel in der Montagephase mit Hilfe dieser Kabelziehkarte bzw. mit Hilfe der der Kabelziehkarte entnehmbaren Montageinformationen verlegt wird. Es liegt also im Rahmen der Erfindung, dass einem zu verlegenden Kabel bzw. der Verlegung eines Kabels eine solche Kabelziehkarte zugeordnet ist. Die auf der Kabelziehkarte dokumentierten Montagedaten werden vorzugsweise mit dem im Rechner erstellten Verlegemodell erzeugt. Zweckmäßigerweise wird die Kabelziehkarte mit einem an den Rechner angeschlossenen Drucker ausgedruckt. Die auf der Kabelziehkarte zu dokumentierenden Montagedaten können von dem vorgenannten Rechner auch an einen zweiten Rechner übermittelt werden, der zweckmäßigerweise im Bereich des Montageortes angeordnet ist. Von diesem zweiten Rechner können die Montagedaten ausgegeben werden bzw. als Kabelziehkarte mit einem an diesen zweiten Rechner angeschlossenen Drucker ausgedruckt werden. Die Übermittlung der Montagedaten von dem ersten Rechner zu dem zweiten Rechner kann dabei drahtgebunden oder drahtlos erfolgen.

Die auf der Kabelziehkarte dokumentierten Montagedaten betreffen insbesondere den Kabeltyp bzw. die Kabeleigenschaften und/oder den Anfangspunkt A und den Endpunkt E der Kabelverlegung und/oder die zwischen Anfangspunkt A und Endpunkt E benötigten bzw. zu benutzenden Wegelemente/Kabeltrassen. Die Kabelziehkarte wird in der Montagephase zweckmäßigerweise zum Montageort mitgeführt und dort können der Kabelziehkarte dann die erforderlichen Montagedaten entnommen werden.

Gemäß einer besonders bevorzugten Ausführungsform der Erfindung ist zumindest ein Teil der Montagedaten der Kabelziehkarte in einem auf der Kabelziehkarte angeordneten Barcode erfasst und dieser Barcode ist für die Montage des Kabels mit einem Barcodeleser einlesbar. Diese Ausführungsform der Erfindung hat sich besonders bewährt. Es liegt im Rahmen der Erfindung, dass nach der Verlegung bzw. nach der Montage eines Kabels die Kabelziehkarte von einem Barcodeleser eingelesen wird, der zweckmäßigerweise an den Rechner angeschlossen ist bzw. mit dem Rechner verbunden ist. Beim Einlesen des Barcodes der Kabelziehkarte durch den Barcodeleser wird dem Rechner die Information übermittelt, dass das der Kabelziehkarte zugeordnete Kabel verlegt bzw. montiert ist. Dabei werden also dem verlegten/montierten Kabel zugeordnete Ist-Daten über den Barcodeleser in den Rechner eingespeist und dort zweckmäßigerweise als Ist-Zustand gespeichert.

Zweckmäßigerweise sind die zu verlegenden Kabel jeweils auf Kabeltrommeln aufgenommen. Nach einer bevorzugten Ausführungsvariante der Erfindung ist an einer Kabeltrommel ein Barcode angebracht, der mit einem Barcodeleser eingelesen werden kann. Diesem Barcode sind zweckmäßigerweise Informationen über den Kabeltyp bzw. die Kabeleigenschaften entnehmbar, beispielsweise über den Kabelquerschnitt und/oder die Kabelkapazität und/oder die Art der Kabelummantelung. Nach einer ganz besonders bevorzugten Ausführungsform der Erfindung kann ein portabler Barcodeleser zum Einlesen des Barcodes auf den Kabeltrommeln verwendet werden.

Der Erfindung liegt die Erkenntnis zugrunde, dass mit dem erfindungsgemäßen Verfahren eine zügige und wenig aufwendige bzw. wenig zeitaufwendige Kabelverlegung möglich ist. Das erfindungsgemäße Verfahren stellt eine termingerechte Kabelverlegung bzw. termingerechte Errichtung der Anlage sicher. Im Rahmen des erfindungsgemäßen Verfahrens wird stets eine optimale Dokumentation über den Montagefortschritt gewährleistet. Das Verfahren ermöglicht die Sicherung und Dokumentation eines hohen Qualitätsstandards. Nach Beendigung der Kabelverlegung in einer Anlage bzw. in einem Kraftwerk wird in dem Rechner gleichsam der vollständige Ist-Zustand abgespeichert und das (aktualisierte) Verlegemodell entspricht dann quasi diesem Ist-Zustand mit den Ist-Daten der tatsächlich verlegten Kabel und Wegelemente. Insoweit ermöglicht das erfindungsgemäße Verfahren auch eine sehr vorteilhafte Schlussdokumentation der Kabelverlegung, die eine einfache spätere Wartung und Instandhaltung der Kabelanlage erlaubt. Von besonderer Bedeutung ist im Rahmen der Erfindung auch, dass das erfindungsgemäße Verfahren mit herkömmlichen Hardware-Komponenten arbeitet und insoweit keine zusätzlichen kostspieligen Komponenten erforderlich sind. Eine besonders einfache effiziente und funktionssichere Kabelverlegung ist mit der Erstellung und dem Einlesen der erfindungsgemäßen Kabelziehkarten möglich. Diese Verfahrensweise hat sich im Hinblick auf geringen Aufwand sowie zügige und präzise Kabelmontage besonders bewährt.

## Patentansprüche

1. Verfahren zur Verlegung von Kabeln in Industrieanlagen, insbesondere in Kraftwerken,
wobei in einer Vorbereitungsphase Verlegedaten für die Verlegung der Kabel in einen Rechner eingespeist werden,
wobei anhand der Verlegedaten ein Verlegemodell bzw. ein Soll-Zustand für die Verlegung von Kabeln und Wegelementen in der Industrieanlage errechnet wird,
wobei in einer nachfolgenden Montagephase die Wegelemente und die Kabel bzw. die Kabel auf zugeordneten Wegelementen nach dem Verlegemodell in der Industrieanlage verlegt werden und
wobei die den verlegten Wegelementen und Kabeln zugeordneten Ist-Daten in den Rechner eingespeist und dort als Ist-Zustand gespeichert werden und wobei ggf. der Soll-Zustand durch den Ist-Zustand ersetzt wird.

2. Verfahren nach Anspruch 1, wobei die Verlegedaten die mit Kabeln zu verbindenden Anfangs- und Endpunkte und/oder Daten der Wegelemente und/oder Kabeldaten betreffen.

3. Verfahren nach Anspruch 2, wobei die Daten der Wegelemente (Kabeltrassen) zumindest die Länge und die Kabelaufnahmekapazität der Wegelemente betreffen.

4. Verfahren nach einem der Ansprüche 2 oder 3, wobei die Kabeldaten zumindest die Kabellänge und/oder den Kabelquerschnitt und/oder die Kabelkapazität betreffen.

5. Verfahren nach einem der Ansprüche 1 bis 4, wobei in den Rechner als Verlegedaten die mit zumindest einem Kabel zu verbindenden Anfangs- und Endpunkte eingegeben werden und wobei anschließend vom Rechner überprüft wird, ob zwischen einem Anfangspunkt A und einem Endpunkt E bereits zumindest ein Wegelement verlegt ist und wobei bejahendenfalls das Verlegemodell die Verlegung eines Kabels auf dem zumindest einen verlegten Wegelement umfasst/vorschlägt und/oder wobei das Verlegemodell die Verlegung zumindest eines weiteren Wegelementes zwischen A und E umfasst/vorschlägt und wobei das Kabel und/oder das zumindest eine weitere Wegelement in der anschließenden Montagephase verlegt wird/werden.

6. Verfahren nach einem der Ansprüche 1 bis 5, wobei die zumindest einem Kabel zugeordneten Montagedaten auf einer Kabelziehkarte dokumentiert werden, welche Kabelziehkarte von dem Rechner erstellt wird und wobei das Kabel in der Montagephase mit Hilfe der der Kabelziehkarte entnehmbaren Montageinformationen verlegt wird.

7. Verfahren nach Anspruch 6, wobei zumindest ein Teil der Montagedaten der Kabelziehkarte in einem auf der Kabelziehkarte angeordneten Barcode erfasst sind und wobei der Barcode mit einem Barcodeleser eingelesen wird.

8. Verfahren nach einem der Ansprüche 1 bis 7, wobei die zu verlegenden Kabel jeweils auf Kabeltrommeln aufgenommen sind und wobei an einer Kabeltrommel ein Barcode angebracht ist, der mit einem Barcodeleser eingelesen wird.

9. Verfahren nach einem der Ansprüche 1 bis 8, wobei in Abhängigkeit von den Unterschieden zwischen Soll-Zustand und Ist-Zustand erforderlichenfalls weitere Kabel und/oder weitere Wegelemente und/oder weitere Materialien für die Kabelverlegung beschafft werden.
